# FASCICULE DE BREVET EUROPEEN

(11) **EP 1 267 108 B1**
(45) Date de publication et mention de la délivrance du brevet: **18.05.2005**
(21) Numéro de dépôt: 02291080.6
(22) Date de dépôt: 30.04.2002
(51) Int. Cl.: F16K 11/052, F16K 11/074, F16K 11/085

(54) **Vanne mélangeuse, notamment pour chaudière de chauffage central.**
Mischventil, insbesondere für einen Heizkessel
Mixing valve, especially for a boiler

(30) Priorité: 12.06.2001 FR 0107642
(43) Date de publication de la demande: 18.12.2002
(73) Titulaire: Geminox, 29410 Saint Thegonnec (FR)
(72) Inventeur: Kerautret, André, 29230 Landivisiau (FR)
(74) Mandataire: Chambon, Gérard

(56) Documents cités:
- EP-A- 0 750 144
- DE-C- 19 636 200
- FR-A- 2 385 020
- GB-A- 914 537

## Description

L'invention concerne une vanne mélangeuse, notamment pour chaudière de chauffage central, selon le préambule de la revendication 1, telle que connue de FR-A-2 385 020.

Dans les installations de chauffage central à fluide caloporteur, il est connu d'utiliser des vannes de mélange.

En effet, il n'est pas toujours possible ou suffisant de moduler la seule température de la chaudière.

C'est par exemple le cas lorsqu'une chaudière assure en même temps le chauffage du local et celui de l'eau sanitaire. La température de l'eau sanitaire est généralement entretenue à une valeur sensiblement constante qui est trop élevée pour le fluide devant circuler dans les radiateurs de chauffage.

Avec une vanne de mélange quatre voies on peut, par exemple, mélanger une partie du retour radiateurs vers le départ radiateurs, voire même dévier la totalité de ce retour, de telle sorte que le fluide circulant dans les radiateurs peut être maintenu à une température très inférieure à celle du fluide du départ chaudière.

Toutefois jusqu'à présent, il fallait raccorder chaque élément distinct au circuit tel que la vanne, la pompe de circulation, le vase d'expansion, etc., ce qui nécessitait un grand nombre de raccords entraînant des risques de fuite et un temps d'assemblage important.

C'est pourquoi l'inventeur a recherché un système permettant notamment de limiter le nombre de raccords, en particulier en pouvant disposer la pompe de circulation directement sur la vanne.

Pour ce faire, l'invention propose une vanne mélangeuse à quatre voies en croix munie d'un obturateur monté pivotant dans une chambre de circulation de fluide aménagée à l'intersection des quatre voies, qui est notamment remarquable en ce que trois des voies forment respectivement deux entrées opposées et une sortie, l'obturateur selon sa position angulaire permettant de mettre en communication ladite sortie avec au moins une partie d'au moins l'une des entrées tandis que la quatrième voie est séparée de la chambre de circulation mais avec laquelle elle peut communiquer par un orifice d'aspiration ménagé dans ladite chambre de circulation et un orifice de refoulement ménagé dans ladite quatrième voie, lesdits orifices d'aspiration et de refoulement étant destinés à être reliés entre eux par l'intermédiaire d'une pompe de circulation de fluide, l'orifice d'aspiration étant en outre ménagé pour permettre sa mise en communication avec au moins l'une des entrées en fonction de la position angulaire de l'obturateur.

Selon un mode de réalisation, les quatre voies forment une croix, l'obturateur étant monté pivotant sur un quart de tour dans la chambre de circulation entre deux positions extrêmes où il met en communication la sortie et respectivement chacune des entrées, tandis que l'orifice d'aspiration est aménagé pour être entièrement ou partiellement occulté de chacune des entrées par ledit obturateur au cours d'un pivotement complet d'un quart de tour de celui-ci, de telle sorte que l'orifice d'aspiration communique, soit avec l'une ou l'autre des entrées, soit avec les deux, assurant ainsi dans ce dernier cas une position de mélange.

Avantageusement, la quatrième voie est séparée de la chambre de circulation par une cloison partiellement cylindrique dont la surface concave tournée vers l'intérieur de ladite chambre de circulation sert de surface de contact pour l'obturateur tandis que l'orifice d'aspiration est ménagé au voisinage de ladite cloison et présente une section en quart de cercle.

De préférence, la vanne présente une bride de raccordement pour la pompe de circulation et dans laquelle débouchent les orifices d'aspiration et de refoulement, ladite bride de raccordement formant un volume de circulation du fluide qui passe d'un orifice à l'autre sous l'action de ladite pompe de circulation.

Par exemple dans ce cas, l'orifice d'aspiration est aménagé dans la partie centrale de la bride et l'orifice de refoulement à sa périphérie.

Selon un mode de réalisation, les quatre voies forment une croix tandis que la bride de raccordement est disposée sensiblement dans un plan parallèle au plan de ladite croix.

Par exemple une commande motorisée ou manuelle est prévue pour actionner en rotation l'axe de l'obturateur afin d'assurer le pivotement de celui-ci.

Accessoirement, au moins l'une des voies d'entrée comporte au moins un raccord pour le branchement d'un manomètre et/ou d'une soupape.

Comme déjà dit, une vanne selon l'invention est plus particulièrement destinée à servir de vanne mélangeuse pour une chaudière de chauffage central, le départ chaudière et le retour radiateurs étant branchés chacun sur l'une des entrées tandis que le retour chaudière est branché sur la sortie et le départ radiateurs sur la quatrième voie.

Toutefois, il est clair que cette application n'est pas limitatrice de l'invention et que d'autres applications peuvent bien sûr être imaginées.

L'invention sera bien comprise et d'autres applications apparaîtront à la lecture de la description qui va suivre et qui se réfère aux dessins annexés dans lesquels :
- la figure 1 représente en perspective un ensemble d'une vanne quatre voies selon l'invention, sur laquelle est raccordée une pompe de circulation,
- la figure 2 est un éclaté de la figure 1,
- la figure 3 montre en perspective l'obturateur de la vanne sous un autre angle que celui de la figure 2,
- la figure 4 représente en perspective l'ensemble de la figure 1 mais vu du côté pompe de circulation,
- la figure 5 montre la pompe de circulation et la vanne séparées l'une de l'autre, mais en position d'assemblage,
- la figure 6 est une vue de face de la vanne, du côté bride de raccordement,
- la figure 7 est une coupe de la vanne selon un plan contenant les axes des voies de la vanne,
- les figures 8a, 8b et 8c représentent schématiquement la partie centrale de la figure 7 pour une vanne disposée à droite ou à gauche d'une chaudière (en la regardant) dans différentes positions d'ouverture.

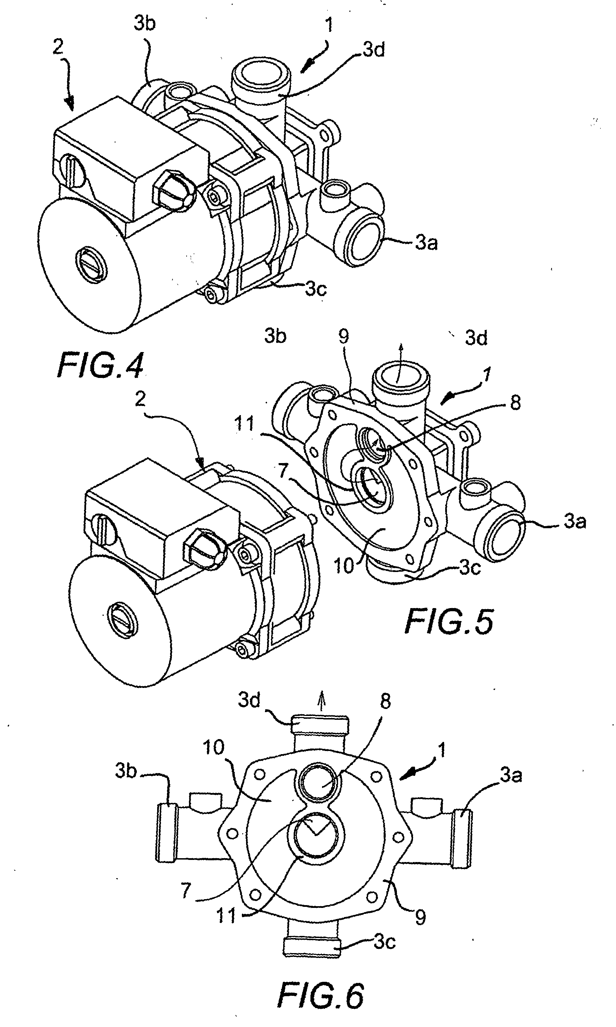

Sur les dessins, on peut voir un ensemble ou bloc d'une vanne de mélange 1 quatre voies selon l'invention, accouplée à un circulateur 2, c'est-à-dire une pompe rotative destinée à faire circuler le fluide à mélanger, la vanne 1 et le circulateur étant bien vus séparément sur la figure 5.

Le mode de réalisation représenté concerne plus particulièrement ici une vanne 1 et un circulateur 2 pour une chaudière de chauffage central.

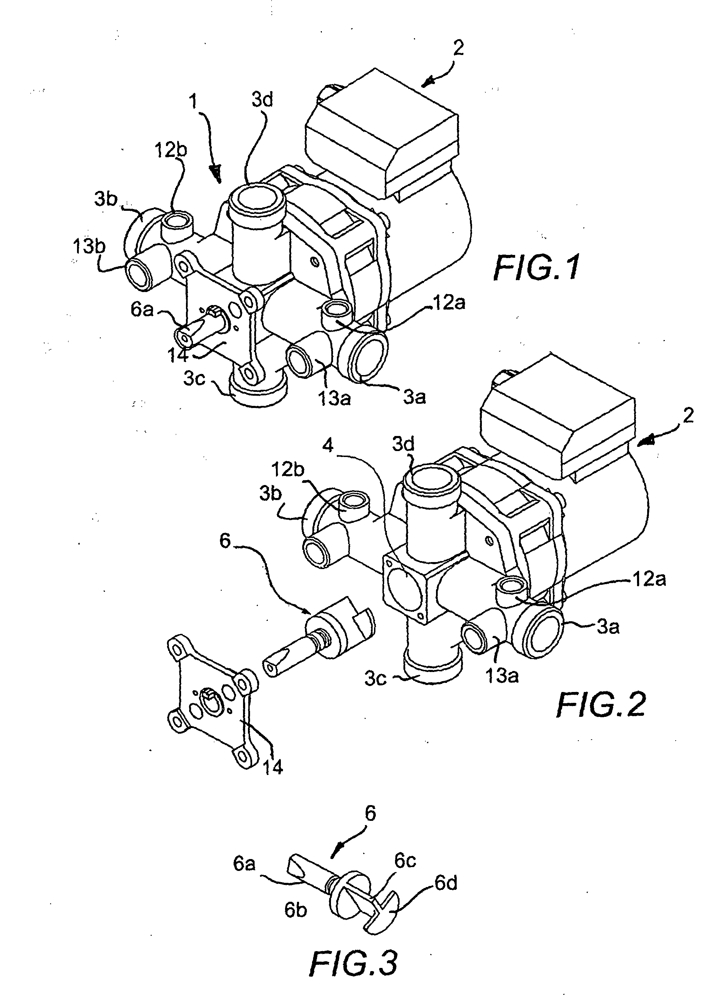

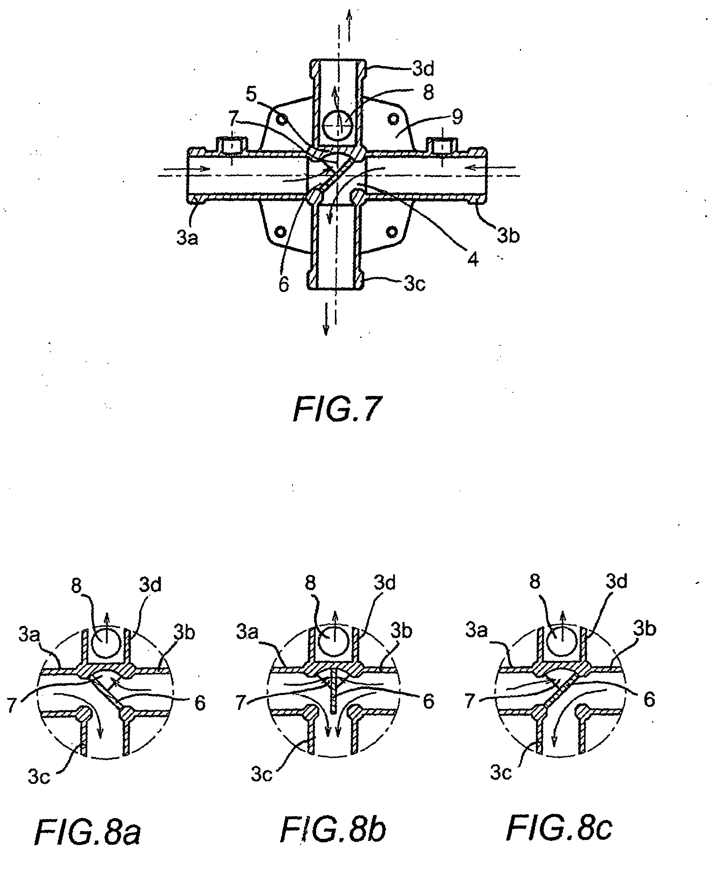

La vanne 1 est pourvue de quatre voies constituées par quatre conduits 3a, 3b, 3c et 3d reliés en croix sur une chambre de circulation 4 (figures 2 et 7).

Comme le montre bien la figure 7, la chambre de circulation 4 permet un raccordement des conduits 3a, 3b et 3c tandis qu'elle est séparée du conduit 3d par une cloison 5.

En outre, dans la chambre 4, est monté pivotant un obturateur 6 du type papillon dont on peut bien voir la forme sur les figures 2 et 3.

L'obturateur papillon 6 est formé d'une queue de commande 6a, d'une plaquette circulaire 6b de fermeture, d'une plaquette rectangulaire d'obturation 6c et d'une plaquette d'appui semi-circulaire 6d.

La cloison 5 de séparation de la chambre 4 et du conduit 3d présente en outre une forme en partie cylindrique dont la concavité est tournée vers l'intérieur et sur laquelle vient en contact l'une des tranche de la plaquette d'obturation 6c de l'obturateur 6 comme le montrent bien les figures7 à 8c.

L'obturateur 6 peut pivoter d'un quart de tour entre une position comme représentée sur les figures 7, 8c jusqu'à une position telle que celle représentée sur la figure 8a, en passant par toutes les positions intermédiaires et notamment la position milieu de la figure 8b.

Dans le fond de la chambre 4 est ménagée, comme le montrent bien les figures 6 à 8c, sous la cloison 5 un orifice d'aspiration 7 ayant une section en quart de cercle tandis que le conduit 3d est pourvu juste au-dessus de la cloison 5 d'un orifice de refoulement 8 ici circulaire.

Par ailleurs, comme le montrent bien les figures 5 et 6, la vanne 1 présente dans un plan parallèle au plan défini par les conduits 3a à 3d, une bride de raccordement 9 pour le circulateur 2, qui forme un volume intérieur 10 dans lequel débouchent d'une part, de façon centrale l'orifice d'aspiration 7 muni d'un rebord circulaire 11 et, d'autre part, de manière périphérique l'orifice de refoulement 8.

Le circulateur 2 qui se raccorde au moyen de la bride 9 est pourvu d'une partie centrale d'aspiration qui vient se raccorder de manière étanche sur le rebord circulaire 11 de l'orifice 7 et d'un moyen de refoulement périphérique, tandis que le volume intérieur 10 de la bride 9 constitue un espace de circulation du fluide de telle sorte que celui-ci est aspiré par l'orifice 7 dans la chambre 4 et ensuite il est refoulé par l'orifice 8 dans le conduit 3d.

Les conduits opposés 3a et 3b forment par exemple des conduits d'entrée ou d'arrivée du fluide, les conduits 3c et 3d des conduits de sortie, ce dernier assurant en outre la circulation du fluide par aspiration et refoulement au moyen du circulateur 2.

En effet, selon la position de l'obturateur 6 au cours de son pivotement d'un quart de tour, on comprend que le fluide qui arrive par les conduits respectivement 3a et 3b peut être entièrement dirigé dans le conduit 3c (figures 8a et respectivement 7 et 8c) ou en partie mélangé dans les conduits 3c et 3d via pour ce dernier les orifices 7 et 8 (figure 8b).

Par ailleurs, on peut voir plus particulièrement sur les figures 1 et 2 des raccords 12a, 12b et 13a, 13b sur les conduits 3a et 3b pour raccorder par exemple des manomètres et/ou des soupapes.

L'ensemble pompe-vanne qui vient d'être décrit est notamment, mais non exclusivement, destiné à équiper une chaudière de chauffage centrale.

Avantageusement selon l'invention, la symétrie du système permet un montage indifféremment à droite ou à gauche de la chaudière.

Dans tous les cas les conduits 3c et 3d sont destinés respectivement au retour chaudière et au départ radiateurs.

Par contre, dans le cas d'une vanne disposée à droite les conduits 3a et 3b sont destinés respectivement au départ chaudière et au retour radiateurs.

Au contraire, dans le cas d'une vanne disposée à gauche de la chaudière, les conduits 3a et 3b sont destinés respectivement au retour radiateurs et au départ chaudière.

Ainsi, la figure 8a représente pour une vanne à droite la position fermée de la vanne (pas de chauffage), puisque le départ chaudière 3a est directement dirigé vers le retour chaudière 3c et que le retour radiateurs 3b communique intégralement avec le départ radiateurs 3d.

La figure 8c représente pour une vanne à droite, une position entièrement ouverte de la vanne (chauffage maximum) puisque le départ chaudière 3a communique directement avec le départ radiateurs 3d et que le retour radiateurs 3b est entièrement dirigé vers le retour chaudière 3c.

On comprend que la figure 8b montre une position intermédiaire de mélange entre les départs et les retours.

Pour une vanne disposée à gauche, la figure 8b représente bien sûr une position équivalente de mélange, alors que les figures 8a et 8c correspondent dans ce cas à des positions respectivement de vanne ouverte (chauffage maximum) et de vanne fermée (pas de chauffage) du fait de l'inversion entre le départ chaudière (dans ce cas 3b) et le retour radiateurs (dans ce cas 3a).

On comprend aussi que les raccords 12a, 13a et 12b, 13b sont généralement utilisés du seul côté chaudière, les raccords de l'autre conduit étant alors par exemple munis d'un bouchon.

La commande de l'obturateur 6 peut bien sûr être manuelle ou motorisée puisqu'il suffit d'un moyen de commande en rotation de la queue 6a dont il est muni, ledit obturateur étant, par exemple, monté dans la chambre 4 au moyen d'une bride 14 (figures 1 et 2) sur laquelle peut être ajusté ledit moyen de commande (non représenté).

## Revendications

1. Vanne mélangeuse à quatre voies en croix munie d'un obturateur (6) monté pivotant dans une chambre de circulation (4) de fluide aménagée à l'intersection des quatre voies, ***caractérisée* en ce que** trois des voies (3a,3b,3c) forment respectivement deux entrées opposées (3a,3b) et une sortie (3c), l'obturateur (6) selon sa position angulaire permettant de mettre en communication ladite (3c) sortie avec au moins une partie d'au moins l'une des entrées tandis que la quatrième voie (3d) est séparée de la chambre de circulation (4) mais avec laquelle elle peut communiquer par un orifice d'aspiration (7) ménagé dans ladite chambre de circulation et un orifice de refoulement (8) ménagé dans ladite quatrième voie (3d), lesdits orifices d'aspiration et de refoulement étant destinés à être reliés entre eux par l'intermédiaire d'une pompe de circulation de fluide (2), l'orifice d'aspiration (7) étant en outre ménagé pour permettre sa mise en communication avec au moins l'une des entrées (3a,3b) en fonction de la position angulaire de l'obturateur (6).

2. Vanne selon la revendication 1, ***caractérisée* en ce que** les quatre voies forment une croix, l'obturateur (6) étant monté pivotant sur un quart de tour dans la chambre de circulation (4) entre deux positions extrêmes où il met en communication la sortie (3c) et respectivement chacune des entrées (3a,3b), tandis que l'orifice d'aspiration (7) est aménagé pour être entièrement ou partiellement occulté de chacune des entrées (3a,3b) par ledit obturateur (6) au cours d'un pivotement complet d'un quart de tour de celui-ci, de telle sorte que l'orifice d'aspiration (7) communique, soit avec l'une ou l'autre des entrées, soit avec les deux, assurant ainsi dans ce dernier cas une position de mélange.

3. Vanne selon l'une des revendications 1 et 2, ***caractérisée* en ce que** la quatrième voie (3d) est séparée de la chambre de circulation (4) par une cloison (5) partiellement cylindrique dont la surface concave tournée vers l'intérieur de ladite chambre de circulation sert de surface de contact pour l'obturateur (6) tandis que l'orifice d'aspiration (7) est ménagé au voisinage de ladite cloison et présente une section en quart de cercle.

4. Vanne selon l'une des revendications 1 et 3, ***caractérisée* en ce qu'**elle présente une bride de raccordement (9) pour la pompe de circulation (2) et dans laquelle débouchent les orifices d'aspiration (7) et de refoulement (8), ladite bride de raccordement formant un volume (10) de circulation du fluide qui passe d'un orifice à l'autre sous l'action de ladite pompe de circulation (2).

5. Vanne selon la revendication 4, ***caractérisée* en ce que** l'orifice d'aspiration (7) est aménagé dans la partie centrale de la bride (9) et l'orifice de refoulement (8) à sa périphérie.

6. Vanne selon l'une des revendications 4 et 5, **caractérisée en ce que** les quatre voies (3a à 3d) forment une croix tandis que la bride de raccordement (9) est disposée sensiblement dans un plan parallèle au plan de ladite croix.

7. Vanne selon l'une des revendications 1 à 6, ***caractérisée* en ce qu'**une commande motorisée ou manuelle est prévue pour actionner en rotation l'axe (6a) de l'obturateur (6) afin d'assurer le pivotement de celui-ci.

8. Vanne selon l'une des revendications 1 à 7, ***caractérisée* en ce qu'**au moins l'une des voies d'entrée (3a,3b) comporte au moins un raccord (12a,12b ; 13a,13b) pour le branchement d'un manomètre et/ou d'une soupape.

9. Vanne selon l'une des revendications 1 à 8, destinée à servir de vanne mélangeuse pour une chaudière de chauffage central, le départ chaudière et le retour radiateurs étant branchés chacun sur l'une des entrées (3a,3b) tandis que le retour chaudière est branché sur la sortie (3c) et le départ radiateurs sur la quatrième voie (3d).

## Patentansprüche

1. Mischventil mit wenigstens vier kreuzförmig angeordneten Wegen, welches mit einem Schieber (6) versehen ist, der schwenkbar in einer Strömungskammer (4) angeordnet ist, welche sich im Schnittpunkt der vier Wege befindet, **dadurch gekennzeichnet, dass** drei Wege (3a, 3b, 3c) jeweils zwei gegenüberliegende Eingänge (3a, 3b) und wenigstens einen Ausgang (3c) bilden, dass der Schieber (6) in seiner Winkelstellung eine Kommunikation des Ausgangs (3c) mit wenigstens einem Teil wenigstens einer der Eingänge erlaubt, wohingegen der vierte Weg (3d) von der Strömungskammer (4) abgetrennt ist, mit welchem diese über eine in der Strömungskammer angeordnete Saugöffnung (7) und eine in dem vierten Weg vorgesehene Drucköffnung (8) kommunizieren kann, wobei die Saugöffnung (7) und die Drucköffnung (8) zur Verbindung miteinander unter Zwischenschaltung einer Umwälzpumpe (2) ausgebildet sind und die Saugöffnung (7) darüber hinaus so ausgebildet ist, um in Abhängigkeit von der Winkelstellung des Schiebers (6) mit wenigstens einem der Eingänge (3a, 3b) verbunden zu werden.

2. Ventil nach Anspruch 1, **dadurch gekennzeichnet, dass** die vier Wege ein Kreuz bilden, dass der Schieber (6) über ein Viertel des Umfangs in der Strömungskammer (4) schwenkbar zwischen zwei Endlagen angeordnet ist, wo er die Verbindung des Ausgangs (3c) mit jeweils einem Eingang (3a, 3b) herstellt, während die Saugöffnung (7) so ausgebildet ist, dass während einer vollständigen Schwenkbewegung des Schiebers über ein Viertel des Umfangs ganz oder teilweise jeder der Eingänge (3a, 3b) von dem Schieber (6) verdeckt ist, derart, dass die Saugöffnung (7) entweder mit einem oder dem anderen der Eingänge oder mit beiden Eingängen kommuniziert, wobei der letztere Fall die Mischstellung beschreibt.

3. Ventil nach einem der Ansprüche 1 oder 2, **dadurch gekennzeichnet, dass** der vierte Weg (3d) durch eine Trennwand (5) von der Strömungskammer (4) getrennt ist, wobei die Trennwand (5) teilweise zylindrisch ausgebildet ist, deren konkave Fläche dem Inneren der Strömungskammer (4) zugekehrt ist und eine Kontaktfläche für den Schieber (6) bildet, während die Saugöffnung (7) in der Nähe der Trennwand (5) angeordnet ist und einen Viertelkreis-Abschnitt bildet.

4. Ventil nach einem der Ansprüche 1 bis 3, **dadurch gekennzeichnet, dass** diese einen Verbindungsflansch (9) für die Umwälzpumpe (2) aufweist, in den die Saugöffnung (7) und die Drucköffnung (8) münden, wobei der Verbindungsflansch (9) ein Volumen (10) zur Zirkulation von Flüssigkeit bildet, die mit Hilfe der Umwälzpumpe (2) von einer Öffnung zur anderen geführt wird.

5. Ventil nach Anspruch 4, **dadurch gekennzeichnet, dass** die Saugöffnung (7) in einem mittleren Bereich des Flansches (9) und die Drucköffnung (8) in einem Randbereich des Flansches angeordnet ist.

6. Ventil nach einem der Ansprüche 4 oder 5, **dadurch gekennzeichnet, dass** die vier Wege (3a bis 3d) ein Kreuz bilden, während der Verbindungsflansch (9) sich etwa in einer Ebene erstreckt, die planparallel zur Ebene des Kreuzes ist.

7. Ventil nach einem der Ansprüche 1 bis 6, **dadurch gekennzeichnet, dass** eine motorisierte oder manuelle Steuerung zur Betätigung der Drehachse (6a.) des Schiebers (6) vorgesehen ist, um die Schwenkbewegung des Schiebers (6) zu bewirken.

8. Ventil nach einem der Ansprüche 1 bis 7, **dadurch gekennzeichnet, dass** wenigstens einer der Eingangswege (3a, 3b) wenigstens einen Anschluss (12a, 12b; 13a, 13b) für den Anschluss an ein Manometer und/oder ein Ventil aufweist.

9. Ventil nach einem der Ansprüche 1 bis 8, als Mischventil für einen Zentralheizungskessel, wobei der Heizkesselvorlauf und der Heizkörperrücklauf jeweils an einen der Eingänge (3a, 3b) angeschlossen sind, während der Heizkesselrücklauf an den Ausgang (3c) und der Heizkörpervorlauf an den vierten Weg (3d) angeschlossen sind.

## Claims

1. Mixer valve with four passages in the form of a cross provided with a closing element (6) which is mounted pivotably in a chamber (4) for circulation of fluid arranged at the intersection of the four passages, **characterised in that** three of the passages (3a, 3b, 3c) respectively form two opposing inlets (3a, 3b) and one outlet (3c), the closing element (6) by its angular position making it possible to bring said outlet (3c) into communication with at least a portion of at least one of the inlets while the fourth passage (3d) is separated from the circulating chamber (4) but can communicate with it through an intake orifice (7) formed in said circulating chamber and a discharge orifice (8) formed in said fourth passage (3d), said intake and discharge orifices being designed to be connected to one another through the intermediary of a fluid circulating pump (2), the intake orifice (7) being additionally formed to allow it to be brought into communication with at least one of the inlets (3a, 3b) as a function of the angular position of the closing element (6).

2. Valve according to claim 1, **characterised in that** the four passages form a cross, the closing element (6) being mounted so that it can pivot over a quarter of a turn in the circulating chamber (4) between two extreme positions in which it brings the outlet (3c) and respectively each of the inlets (3a, 3b) into communication, while the intake orifice (7) is arranged so as to be wholly or partly blocked off from each of the inlets (3a, 3b) by said closing element (6) in the course of a complete pivoting movement of a quarter of a turn of the latter, such that the intake orifice (7) communicates either with one or other of the inlets or with the two, thus producing a mixing position in this latter case.

3. Valve according to one of claims 1 and 2, **characterised in that** the fourth passage (3d) is separated from the circulating chamber (4) by a partially cylindrical partition wall (5) the concave surface of which facing towards the interior of said circulating chamber serves as a contact surface for the closing element (6), while the intake orifice (7) is formed in the vicinity of said partition wall and exhibits a section in the form of a quarter of a circle.

4. Valve according to one of claims 1 and 3, **characterised in that** it exhibits a connecting flange (9) for the circulating pump (2) and in which the intake orifice (7) and discharge orifice (8) debouch, said connecting flange forming a volume (10) for circulation of fluid which passes from one orifice to the other under the action of said circulating pump (2).

5. Valve according to claim 4, **characterised in that** the intake orifice (7) is arranged in the central portion of the flange (9) and the discharge orifice (8) is arranged at its periphery.

6. Valve according to one of claims 4 and 5, **characterised in that** the four passages (3a to 3d) form a cross while the connecting flange (9) is disposed substantially in a plane parallel to the plane of said cross.

7. Valve according to one of claims 1 to 6, **characterised in that** a motorised or manual control is provided to rotate the shaft (6a) of the closing element (6) in order to pivot the latter.

8. Valve according to one of claims 1 to 7, **characterised in that** at least one of the inlet passages (3a, 3b) comprises at least one connector (12a, 12b; 13a, 13b) for connection of a pressure gauge and/or a valve.

9. Valve according to one of claims 1 to 8, designed to serve as a mixer valve for a central heating boiler, the outlet of the boiler and the return of the radiators being each connected to one of the inlets (3a, 3b) while the return of the boiler is connected to the outlet (3c) and the outlet of the radiators is connected to the fourth passage (3d).
